# EUROPÄISCHE PATENTSCHRIFT

(11) **EP 2 492 669 B1**
(45) Veröffentlichungstag und Bekanntmachung des Hinweises auf die Patenterteilung: **30.04.2014**
(21) Anmeldenummer: 12156297.9
(22) Anmeldetag: 21.02.2012
(51) Int. Cl.: G01N 25/26, G01K 17/00

(54) **Probengefäss für kalorimetrische Messungen**
Sample container for calorimetric measurements
Récipient à échantillon pour des mesures calorimétriques

(30) Priorität: 24.02.2011 CH 3272011
(43) Veröffentlichungstag der Anmeldung: 29.08.2012
(73) Patentinhaber: SWISSI Process Safety GmbH, 4058 Basel (CH)
(72) Erfinder: GWERDER, Carl, 4106 Therwil (CH); STOCKS, Volker, 79400 Kandern (DE); STOESSEL, Francis, 68110 Illzach (FR); SUTER, Georg, 4450 Sissach (CH)
(74) Vertreter: Clerc, Natalia

(56) Entgegenhaltungen:
- DE-C- 356 313
- DE-C- 761 269
- GB-A- 1 490 449
- RU-C1- 2 135 967

## Beschreibung

### TECHNISCHES GEBIET

Die vorliegende Erfindung betrifft Hochdrucktiegel für kalorimetrische und thermoanalytische Messungen gemäss Oberbegriff des Patentanspruchs 1.

### STAND DER TECHNIK

Die Thermoanalyse und die Mikrokalorimetrie werden insbesondere in der Forschung, in der Qualitätskontrolle und für die Abklärung der thermischen Sicherheit von chemischen Produktionsverfahren eingesetzt. Mit thermoanalytischen und kalorimetrischen Messmethoden, wie beispielsweise der differenziellen Scanning-Kalorimetrie, lässt sich erkennen, bei welcher Temperatur sich eine Probe umwandelt oder reagiert und wie gross die dazu erforderliche Wärmemenge ist, beziehungsweise wie viel Wärme freigesetzt wird. Bei der Abklärung der thermischen Sicherheit werden Edukte, Produkte und Reaktionsmischungen in verschiedenen Stadien der Reaktion mittels Mikrokalorimetrie untersucht, um das thermische Risiko des Produktionsverfahrens quantitativ bemessen zu können.

Um eine derartige kalorimetrische Messung durchzuführen, wird eine Probe in ein Probengefäss gegeben und bevorzugt druckdicht verschlossen. Das Probengefäss wird mit der Probe einem Temperaturprogramm unterworfen, und das thermische Verhalten wird beobachtet. Das Probengefäss muss in gewissen Fällen einem hohen Druck standhalten können und ist dann als ein Hochdrucktiegel ausgebildet. Zudem sollte es eine möglichst geringe Masse aufweisen, um eine möglichst grosse Messempfindlichkeit zu gewährleisten. Eine zu grosse Masse des Probengefässes beeinträchtigt die Messung, indem sie durch ihr träges Temperaturverhalten die Erfassung von schnellen Phänomenen verunmöglicht und zudem die Heizgeschwindigkeit und somit die Anzahl der pro Zeit durchgeführten Messungen begrenzt.

Auf dem Gebiet der thermischen Sicherheit hat sich ein Einweg- Probengefäss aus vergoldetem Stahl bewährt, welches einem Druck von bis zu 200 bar standhält. Dieses Probengefäss besteht aus einem einen Hohlraum aufweisenden Aufnahmegefäss, welches mit einem ebenfalls aus vergoldetem Stahl gefertigten Deckel verschliessbar ist. Der Verschluss erfolgt durch Kaltverschweissen des Probengefässes, indem der Deckel in eine Fassung des Aufnahmegefässes des Probengefässes gepresst wird. Dieses Probengefäss besitzt bei einem Probevolumen von ca. 50 µl eine Masse von 1.5 g. Derartige Probengefässe sind beispielsweise in der CH 695 709 und der CH 696 370 offenbart.

Weitere Probengefässe, welche für die thermische Analyse von Proben geeignet sind, sind aus den Dokumenten DE 43 34 770, WO 2009/070904, US 4,303,615 und DE 36 20 381 bekannt.

Wesentlich für die Genauigkeit von derartigen kalorimetrischen Messungen ist eine homogene Temperaturverteilung im Probengefäss während des gesamten Messverfahrens. Aus verschiedenen Gründen kann eine derartige homogene Temperaturverteilung im Probengefäss jedoch nicht immer gewährleistet werden. Beispielsweise können während dem Messverfahren im Probengefäss chemische Reaktionen ablaufen, welche an einer beliebigen, räumlich begrenzten Stelle im Probengefäss starten bzw. enden. Die von der chemischen Reaktion freigesetzte Wärmeenergie wird dadurch ungleichmässig über das Probengefäss verteilt, was einerseits zu Messungsartefakten führt und sich andererseits störend auf die Modellierung der Versuchsanordnung auswirkt. Um eine homogenere Wärmeverteilung im Probengefäss zu erreichen, werden üblicherweise die räumlichen Dimensionen des Probengefässes soweit wie möglich verkleinert. Dem Verkleinern der räumlichen Abmessungen des Probengefässes sind allerdings technische Grenzen gesetzt, was insbesondere mit den Anforderungen des Probengefässes an hohe Druckverhältnisse zu tun hat. Ausserdem führt das Verkleinern des Probengefässes zu einer Verminderung der Messempfindlichkeit.

### DARSTELLUNG DER ERFINDUNG

Es ist also eine Aufgabe der vorliegenden Erfindung, ein Probengefäss für kalorimetrische Messungen anzugeben, bei dem die Wärmeenergie während einer kalorimetrischen Messung gleichmässig über das gesamte Probengefäss verteilt ist, dessen Wärmeverteilung also homogenisiert ist. Zur Lösung dieser Aufgabe wird ein Probengefäss vorgeschlagen, wie es in Anspruch 1 angegeben ist. Vorteilhafte Ausgestaltungen der Erfindung sind in den abhängigen Ansprüchen angegeben.

Die vorliegende Erfindung stellt also ein Probengefäss für kalorimetrische Messungen zu Verfügung, aufweisend ein Aufnahmegefäss mit einem Boden, einem umlaufenden Mantel und einem Hohlraum, welcher durch den Mantel und den Boden begrenzt ist und zur Aufnahme einer Probe dient. Erfindungsgemäss ist im Hohlraum zumindest eine Struktur vorhanden, welche dazu dient, die Wärmeverteilung im Probengefäss während einer Kalorimetriemessung zu homogenisieren.

Beim Probengefäss handelt es sich um einen Hochdrucktiegel. Ein Hochdrucktiegel ist im Allgemeinen dazu geeignet, einem hohen Druck im Hohlraum des Aufnahmegefässes standhalten zu können. Der Hochdrucktiegel weist dazu vorteilhaft eine einfache und robuste Bauart auf. Ausserdem ist ein Hochdrucktiegel bevorzugt derart ausgebildet, dass er einfach luftdicht verschliessbar ist, wobei dafür am Aufnahmegefäss vorteilhaft entsprechend ausgebildete Elemente vorgesehen sind, welche ein luftdichtes Verschliessen des Hohlraums mit einem Verschlusselement, wie z.B. einem Deckel, ermöglichen. Bei diesen Elementen zum luftdichten Verschliessen des Hochdrucktiegels kann es sich beispielsweise um einen Verbindungsbereich handeln, der verdickt, wulstartig, gerillt, geläppt oder auf eine andere, geeignete Weise ausgebildet ist. Der luftdicht verschlossene Hochdrucktiegel bildet typischerweise eine Kapsel, in welcher die Probe für die thermoanalytische Analyse aufgenommen ist.

Die Struktur weist insbesondere eine wärmeleitende Funktion auf, so dass sie die Wärmeenergie gleichmässig vom Inneren des Probengefässes zur Aussenseite des Probengefässes leitet bzw. von der Aussenseite des Probengefässes ins Innere. Um die Wärmeverteilung im Probengefäss während einer Kalorimetriemessung zu homogenisieren, ist die Struktur zudem vorteilhaft in demjenigen Bereich des Hohlraums angeordnet, welcher bei bestimmungsgemässer Verwendung des Probengefässes zur Aufnahme der zu analysierende Probe dient. Mit anderen Worten ist die Struktur bevorzugt derart angeordnet, dass sie während einer Kalorimetriemessung zumindest teilweise von der Probe umgeben ist.

Zusätzlich kann das Probengefäss einen Deckel zum Verschliessen des Hohlraums aufweisen, welcher üblicherweise in Bezug auf den Hohlraum auf der gegenüberliegenden Seite des Bodens angeordnet ist. Das Aufnahmegefäss ist dann mit dem Deckel bevorzugt luftdicht verschliessbar, wodurch das Probengefäss eine Kapsel bildet.

Das Aufnahmegefäss und insbesondere der Hohlraum können unterschiedliche Ausgestaltungen aufweisen. In der Regel weisen sie jedoch beide eine im Wesentlichen zylindrische Form auf. Insbesondere kann der Mantel im Wesentlichen die Form eines Hohlzylinders aufweisen. Der Boden bildet dann bevorzugt eine plane Fläche, mit welcher der Mantel einen im Wesentlichen senkrechten Winkel einschliesst. Es sind aber auch andere Formen, wie beispielsweise eine kugelförmige oder, was allerdings weniger vorteilhaft ist, eine quader- oder eine würfelförmige Ausgestaltung des Hohlraums möglich.

Um eine möglichst gleichmässige Wärmeverteilung im Probengefäss zu gewährleisten, ist die Struktur vorteilhaft achsensymmetrisch in Bezug auf eine Längsachse des Hohlraums ausgestaltet.

Die Struktur unterteilt den Hohlraum bevorzugt in Kammern, welche miteinander verbunden sind. Die Struktur weist also bevorzugt selbst keine in sich geschlossenen Kammern auf und bildet bevorzugt auch zusammen mit dem Boden oder dem Mantel keine in sich geschlossenen Kammern. Vorteilhaft unterteilt die Struktur den Hohlraum dabei derart, dass bei bestimmungsgemässer Verwendung des Probengefässes in jeder relativ zur Schwerkraftsrichtung senkrecht stehenden Ebene alle Bereiche des Hohlraums innerhalb derselben Ebene miteinander verbunden sind. Bei bestimmungsgemässer Verwendung des Probengefässes ist der Boden des Probengefässes üblicherweise in Bezug auf die Schwerkraftsrichtung unten angeordnet, und der Mantel erstreckt sich von diesem aus in die der Schwerkraftsrichtung entgegengesetzten Richtung nach oben hin.

Der Hohlraum weist bevorzugt einen zentral angeordneten Kanal auf, welcher vollständig durch die Struktur hindurch führt. Der Kanal kann dient dabei insbesondere dazu dienen, die Kammern miteinander zu verbinden, welche durch die Unterteilung des Hohlraums mittels der Struktur entstehen.

Der Hohlraum weist eine radiale Richtung mit einem Innendurchmesser auf. Die Struktur erstreckt sich über mindestens die Hälfte dieses Innendurchmessers in die radiale Richtung.

Der Hohlraum weist eine Längsachse auf. Er hat entlang dieser Längsachse eine gewisse Längenausdehnung, welche sich, falls ein Deckel vorhanden ist, von der Oberseite des Bodens bis zu der Unterseite des Deckels erstreckt. Die Struktur erstreckt sich entlang der Längsachse, insbesondere bevorzugt durchgehend, über mindestens die Hälfte der Längenausdehnung des Hohlraums. Vorteilhaft erstreckt sich die Struktur entlang der Längsachse sogar über die im Wesentlichen gesamte Längenausdehnung des Hohlraums. Insbesondere bevorzugt füllt die Struktur den Hohlraum im Wesentlichen vollständig und gleichmässig aus.

Die Struktur ist vorteilhaft mit dem Mantel verbunden oder liegt an diesem an. Ebenfalls vorteilhaft ist die Struktur mit dem Boden verbunden oder liegt am Boden an. Zudem ist es auch von Vorteil, wenn die Struktur am Deckel anliegt oder mit diesem verbunden ist. Dadurch ist ein optimaler Wärmeaustausch zwischen Struktur und Mantel bzw. Boden bzw. Deckel möglich. Diese Verbindung oder dieses Anliegen der Struktur am Mantel und/oder Boden und/oder Deckel kann ausserdem dazu dienen, die mechanische Stabilität des Probengefässes zu erhöhen. Dadurch kann bei gleicher mechanischer Stabilität die Masse des Probengefässes relativ zur Masse der Probe reduziert werden, um die Messgenauigkeit der kalorimetrischen Messung zu erhöhen.

Um eine optimale Wärmeleitung zu gewährleisten und die mechanische Stabilität des Probengefässes weiter zu verbessern, ist die Struktur vorteilhaft sogar einstückig mit dem Mantel und/oder dem Boden ausgebildet. Sie kann aber auch einstückig mit dem Deckel ausgebildet sein. Bevorzugt sind zudem auch der Boden und der Mantel des Probengefässes einstückig miteinander ausgebildet. Alternativ kann die Struktur aber auch als Einsatz ausgebildet sein, welcher in das Aufnahmegefäss einsetzbar ist und dabei vorteilhaft in den Hohlraum einklemmbar ist, um einen möglichst guten Wärmeaustausch mit dem Mantel, dem Boden und dem Deckel ermöglichen.

Die Struktur weist bevorzugt eine Wandstärke auf, welche im Wesentlichen der Wandstärke des Mantels entspricht.

In einer bevorzugten Ausführungsform ist die Struktur als eine Mehrzahl von Radialrippen ausgebildet. Die Radialrippen sind dabei vorteilhaft in gleichmässigen Abständen entlang der Umfängsrichtung des Mantels angeordnet, wodurch sie eine sternförmige Anordnung aufweisen. Vorzugsweise sind dabei genau sechs Radialrippen vorhanden. Die zwischen den Rippen vorhandenen Kammern bilden dann im Querschnitt betrachtet im Wesentlichen gleichseitige Dreiecke, was einer optimalen Struktur zum Ableiten der Wärmeenergie entspricht. Die Radialrippen können zudem Ausnehmungen aufweisen, welche insbesondere jeweils eine bogenförmige Kontur aufweisen können. Die bogenförmige Kontur kann dabei insbesondere parabelförmig sein.

Die Struktur kann aber auch als eine Mehrzahl von gebogenen Rippen ausgebildet sein, welche insbesondere im Querschnitt betrachtet die Form eines Schaufelrades beschreiben können. Eine weitere Möglichkeit ist es, die Struktur spiralförmig auszubilden. Die Struktur weist dann die Form einer Spirale auf, welche sich entlang der Längsrichtung des Hohlraums von unten nach oben windet.

Das Probengefäss kann je nach Messmethode und Messinstrument unterschiedliche Formen und Dimensionen annehmen. Das Volumen des Hohlraums beträgt bevorzugt zwischen 5 µl und 20 ml, insbesondere bevorzugt 5 - 100 µl für mikrokalorimetrische Messungen, 0.1 - 6 ml für die Differenzthermoanalyse und 1 - 20 ml für Autoklaven. Die bevorzugte Masse des Probengefässes beträgt 0.22 g bis 550 g. Für die Mikrokalorimetrie beträgt die Masse des Aufnahmegefässes des Probengefässes dabei vorzugsweise 0.22 - 1.5 g, für die Differenzthmeroanalyse 5 - 30 g und für Autoklaven 30 - 550 g. Im Falle einer zylindrischen Ausgestaltung weist das Aufnahmegefäss bevorzugt einen Innendurchmesser von 4 mm bis 3.0 cm bei einer Höhe von 3 mm bis 6 cm und bei einer bevorzugten Wandstärke von 0.2 mm bis 3 mm auf. Vorzugsweise betragen der Innendurchmesser, die Höhe und die Wandstärke bei einer zylindrischen Ausgestaltung des Aufnahmegefässes jeweils in der Mikrokalorimetrie bevorzugt 4 - 8 mm, 3 - 6 mm und 0.2 - 1.0 mm, in der Differenzthermoanalyse bevorzugt 0.5 - 2.0 cm, 0.5 - 4 cm und 0.2 - 1.5 mm und für Autoklaven bevorzugt 0.5 - 3.0 cm, 1 - 6 cm und 0.5 - 3 mm.

Das Aufnahmegefäss ist bevorzugt aus Stahl, insbesondere aus vergoldetem Stahl, hergestellt. Ebenso ist der Deckel des Probengefässes bevorzugt aus Stahl, vergoldetem Stahl oder aus Reingold hergestellt. Alternativ könnte das Probengefäss aber auch aus einer Nickelbasislegierung, Titan, einer Aluminium-Silizium-Legierung oder sogar aus reinem Aluminium hergestellt sein.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht des Aufnahmegefässes eines Probengefässes gemäss einer ersten Ausführungsform;
- Fig. 2: eine Seitenansicht des Aufnahmegefässes der Fig. 1;
- Fig. 3: eine Querschnittsansicht in der Ebene III-III durch das Aufnahmegefäss der Fig. 1;
- Fig. 4: einen zentralen Längsschnitt in der Ebene IV-IV durch das Aufnahmegefäss der Fig. 1;
- Fig. 5: eine perspektivische Ansicht des Aufnahmegefässes eines Probengefässes gemäss einer zweiten Ausführungsform;
- Fig. 6: eine Seitenansicht des Aufnahmegefässes der Fig. 5;
- Fig. 7: eine Querschnittsansicht in der Ebene VII-VII des Aufnahmegefässes der Fig. 5;
- Fig. 8: einen zentralen Längsschnitt in der Ebene VIII-VIII durch das Aufnahmegefäss der Fig. 5;
- Fig. 9: eine perspektivische Ansicht des Aufnahmegefässes eines Probengefässes gemäss einer dritten Ausführungsform;
- Fig. 10: eine Seitenansicht des Aufnahmegefässes der Fig. 9;
- Fig. 11: eine Querschnittsansicht in der Ebene XI-XI des Aufnahmegefässes der Fig. 9;
- Fig. 12: einen zentralen Längsschnitt in der Ebene XII-XII durch das Aufnahmegefäss der Fig. 9;
- Fig. 13: eine perspektivische Ansicht des Aufnahmegefässes eines Probengefässes gemäss einer vierten Ausführungsform;
- Fig. 14: eine Seitenansicht des Aufnahmegefässes der Fig. 13;
- Fig. 15: eine Querschnittsansicht in der Ebene XV-XV des Aufnahmegefässes der Fig. 13;
- Fig. 16: einen zentralen Längsschnitt in der Ebene XVI-XVI durch das Aufnahmegefäss der Fig. 13;
- Fig. 17: eine perspektivische Ansicht des mit einem Verschlusskörper verschlossenen Aufnahmegefässes eines Probengefässes gemäss einer fünften Ausführungsform,
- Fig. 18: eine perspektivische Schnittansicht des mit einem Verschlusskörper verschlossenen Aufnahmegefässes der Fig. 17, mit daran angebrachtem Anschlussstück;
- Fig. 19: eine Seitenansicht des mit einem Verschlusskörper verschlossenen Aufnahmegefässes der Fig. 17, mit daran angebrachtem Anschlussstück;
- Fig.20: eine Querschnittsansicht in der Ebene XX-XX des mit einem Verschlusskörper verschlossenen Aufnahmegefässes der Fig. 17, mit daran angebrachtem Anschlussstück;
- Fig. 21: einen zentralen Längsschnitt in der Ebene XXI-XXI des mit einem Verschlusskörper verschlossenen Aufnahmegefässes der Fig. 17, mit daran angebrachtem Anschlussstück; sowie
- Fig. 22: eine perspektivische Ansicht des Aufnahmegefässes eines Probengefässes gemäss einer sechsten Ausführungsform.

### BESCHREIBUNG BEVORZUGTER AUSFÜHRUNGSFORMEN

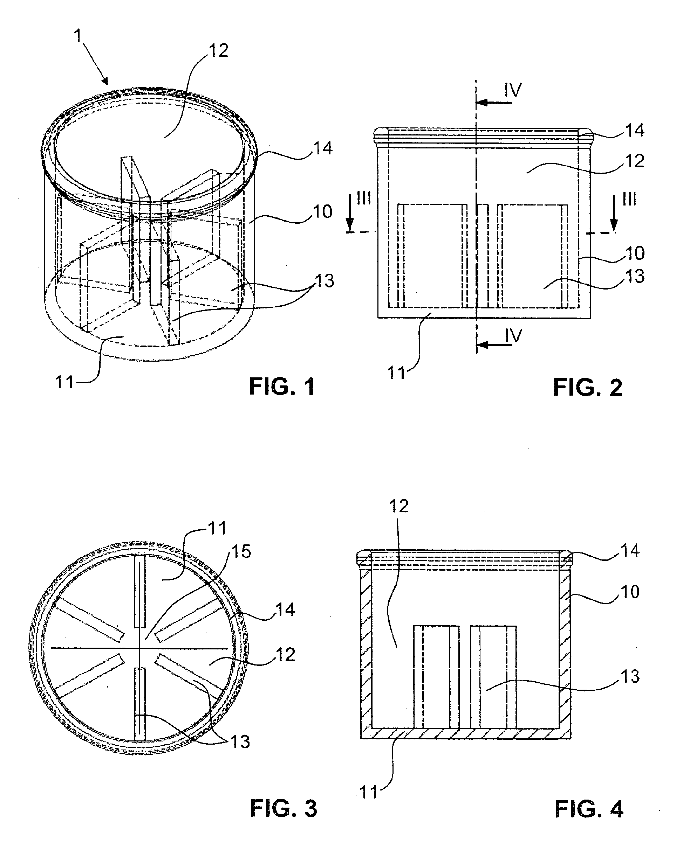

Die Figuren 1 bis 22 illustrieren verschiedene Ausführungsformen von erfindungsgemässen Probengefässen. Die in den Figuren 1 bis 21 gezeigten Ausführungsformen betreffen jeweils Probengefässe in Form von Hochdrucktiegeln. Identisch oder ähnlich ausgestaltete Elemente der verschiedenen Ausführungsformen sind in den Figuren 1 bis 22 jeweils mit den gleichen Bezugszeichen nummeriert.

Die Figuren 1 bis 4 zeigen in unterschiedlichen Darstellungen ein erstes Ausführungsbeispiel eines Aufnahmegefässes 1 eines erfindungsgemässen Probengefässes. Das Probengefäss ist hier als ein Hochdrucktiegel ausgebildet und für insbesondere für Mikrokalorimetriemessungen geeignet.

Das Aufnahmegefäss 1 weist einen Boden 11 auf, welcher hier planar ausgebildet ist und von welchem sich senkrecht dazu ein umlaufender Mantel 10 nach oben hin erstreckt. Der obere Rand des Mantels 10 weist einen radial nach aussen hin gerichteten Wulst auf, welcher einen Verbindungsbereich 14 bildet. Der Verbindungsbereich 14 dient zum Anbringen eines in den Fig. 1 bis 4 nicht gezeigten Deckels, mit welchem das Aufnahmegefäss 1 luftdicht verschliessbar ist. Der Deckel kann dabei in den vom Mantel 10 umgebenen Raum hineinragen. Der Deckel kann beispielsweise mittels Kaltverschweissen oder mittels Verschraubung am Aufnahmegefäss 1 angebracht werden. Der Verbindungsbereich 14, welcher nicht zwingend wulstartig ausgebildet sein muss, kann dazu entsprechende Strukturen aufweisen, bei welchen es sich beispielsweise um Rillen, ein Aussen- oder Innengewinde oder eine speziell glatte Oberfläche handeln kann. Die Oberfläche des Verbindungsbereiches 14 kann insbesondere geläppt sein oder Beschichtungen, wie insbesondere eine Goldbeschichtung, aufweisen.

Der Boden 11, der Mantel 10 und der in den Abbildungen nicht gezeigte Deckel begrenzen gemeinsam einen Hohlraum 12 des Hochdrucktiegels. Der Hohlraum 12 dient dabei zur Aufnahme einer Probe, welche kalorimetrisch analysiert werden soll. Der Hohlraum 12 ist, wie im vorliegenden Fall, bevorzugt zylindrisch ausgebildet, kann aber auch andere Formen, wie beispielsweise diejenige einer Kugel, aufweisen.

Erfindungsgemäss ist im Hohlraum 12 eine Struktur 13 vorhanden, welche die Wärmeverteilung im Hochdrucktiegel während einer Kalorimetriemessung homogenisiert. Die Struktur 13 weist dazu insbesondere eine wärmeleitende Funktion auf. Im vorliegenden Ausführungsbeispiel besteht die Struktur aus sechs, sich jeweils in die radiale Richtung des Hohlraums 12 erstreckende Rippen 13, welche sowohl mit dem Boden 11 als auch mit dem Mantel 10 einstückig verbunden sind. Dadurch, dass die Rippen 13 jeweils sowohl mit dem Boden 11 als auch mit dem Mantel 10 verbunden sind, ist die mechanische Stabilität des Tiegels erheblich verbessert. Die Rippen 13 sind jeweils alle identisch zueinander ausgebildet und in regelmässigen Abständen entlang der Umfangsrichtung des Mantels 10 angeordnet. Die Rippen haben jeweils eine rechteckige Form und erstrecken sich in Längsrichtung über mehr als die Hälfte der Längenausdehnung des Hohlraums 12 und des Aufnahmegefässes 1. In radialer Richtung erstrecken sich die Rippen 13 jeweils nicht ganz bis zur zentralen Längsachse des Hohlraums 12 hin. Sie begrenzen dadurch sechs gleichartige Kammern, welche entlang der Längsachse des Hohlraums 12 untereinander verbunden sind. Im Querschnitt des Aufnahmegefässes 1 erstrecken sich die Kammern jeweils über einen Winkelbereich von 60°, wodurch sie jeweils im Wesentlichen die Form eines gleichseitigen Dreiecks mit jeweils einer gekrümmten Seite aufweisen.

Die radial nach innen weisenden Seitenflächen der Rippen 13 begrenzen gemeinsam einen zentralen, sich in Längsrichtung des Hohlraums 12 erstreckenden Kanal 15, welcher als Verbindung der von den Rippen 13 gebildeten Kammern dient. Dieser Kanal 15 erstreckt sich dabei im vorliegenden Ausführungsbeispiel durchgehend durch den gesamten Hohlraum 12.

Der am Aufnahmegefäss 1 angebrachte Deckel kann einen in das Aufnahmegefäss 1 hineinragenden Bereich aufweisen, welcher sich bis zu den Rippen 13 hin erstreckt und dabei insbesondere an diesen anliegen kann

Der Innendurchmesser des Aufnahmegefässes 1 beträgt im Ausführungsbeispiel der Figuren 1 bis 4 zwischen 4 und 8 mm. Bei einem Probevolumen von 5 - 100 µl besitzt das Aufnahmegefäss 1 des Hochdrucktiegels eine Masse von 0.22 - 1.5 g. Die Wandstärke des Mantels 10 beträgt dabei 0.2 - 1.0 mm, und die Höhe des Aufnahmegefässes 1 3 - 6 mm.

Die Wandstärken des Bodens 11, des Mantels 10 sowie der Rippen 13 sind im vorliegenden Ausführungsbeispiel jeweils im Wesentlichen identisch. Ausserdem ist das Aufnahmegefäss bestehend aus Boden 11, Mantel 10 und Rippen 13 hier als ganzes einstückig ausgebildet. Dies muss jedoch nicht zwingend so sein und es sind Ausführungsbeispiele denkbar, bei denen beispielsweise der Boden auf ähnliche Weise wie der gegenüberliegende Deckel am Mantel 10 angebracht werden kann. Ebenso ist anstelle der Rippen 13 eine Struktur zur Homogenisierung der Wärmeverteilung im Probengefäss denkbar, welche als Einsatz in das Aufnahmegefäss einsetzbar ist. Um dennoch einen optimale Wärmeaustausch mit dem Mantel 10 und dem Boden 11 zu gewährleisten, ist dieser Einsatz dann bevorzugt in den Hohlraum 12 eingeklemmt. Die im Hohlraum 12 vorhandene Struktur zum Homogenisieren der Wärmeverteilung kann aber anstatt mit dem Mantel 10 und dem Boden 11 auch mit dem Deckel des Probengefässes verbunden sein. Die Struktur 13 wird in diesem Fall erst beim Verschliessen des Aufnahmegefässes 1 mit dem Deckel in den Hohlraum 12 hineingebracht.

Das Aufnahmegefäss 1 kann beispielsweise aus Stahl, insbesondere aus vergoldetem Stahl, hergestellt sein. Ebenso kann der Deckel des Probengefässes aus Stahl oder vergoldetem Stahl und insbesondere aus Reingold hergestellt sein. Alternativ könnte das Probengefässaber auch aus einer Aluminium-Silizium-Legierung oder sogar aus reinem Aluminium hergestellt sein.

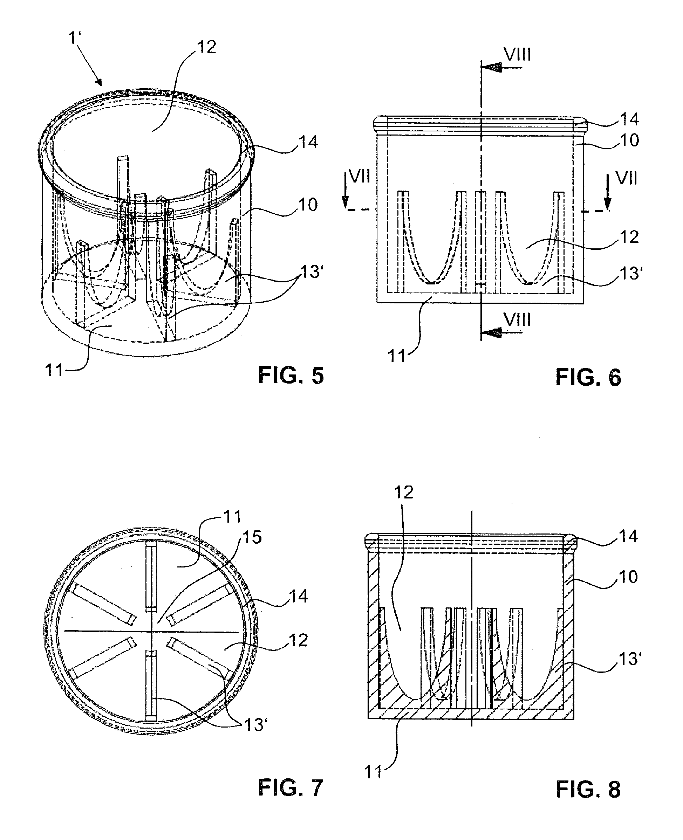

Die im Hohlraum 12 vorhandene Struktur 13, welche die Wärmeverteilung im Tiegel optimiert, kann auf eine unterschiedliche Art und Weise ausgestaltet sein und eine Vielzahl von Abwandlungen sind denkbar. Die Figuren 5 bis 8, 9 bis 12 und 13 bis 16 zeigen weitere erfindungsgemässe Aufnahmegefässe von Probegefässen in Form von Hochdrucktiegeln, welche jeweils identisch wie in der Ausführungsform der Fig. 1 bis 4 ausgebildet sind, jedoch als Alternative zur Struktur 13 andersartig ausgestaltete Strukturen 13', 13" und 13"' im Hohlraum 12 aufweisen. Die Strukturen 13', 13" und 13'" weisen jedoch alle dieselbe Funktion wie die Struktur 13 auf, nämlich die Wärmeverteilung des Probengefässes während einer Kalorimetriemessung zu homogenisieren.

Die in den Fig. 5 bis 8 gezeigte Ausführungsform eines Aufnahmegefässes 1' eines Probengefässes in Form eines Hochdrucktiegels unterscheidet sich von dem in den Fig. 1 bis 4 gezeigten Gegenstand dadurch, dass die vertikalen Radialrippen 13' jeweils eine Ausnehmung mit einer bogenförmigen Kontur aufweisen, die nach oben hin, also zu der mit einem Deckel verschliessbaren Öffnung des Aufnahmegefässes 1' hin, offen sind. Die bogenförmigen Kontur kann, muss aber nicht parabelförmig sein. Der Scheitelpunkt der bogenförmigen Kontur, welcher jeweils den untersten Punkt der Ausnehmung bildet, ist dabei jeweils geringfügig beabstandet vom Boden 11 und in radialer Richtung in der Mitte der Rippe 13' angeordnet. Im Bereich der oberen Enden der Rippen 13' erstrecken sich die Ausnehmungen jeweils in radialer Richtung über beinahe den gesamten Bereich der Rippe 13'.

Die Ausnehmungen der Rippen 13' gewährleisten eine bessere Verbindung zwischen den Kammern, welche sich zwischen den Rippen 13' befinden, je mehr der Hohlraum 12 mit der zu analysierenden Probe gefüllt ist. Dennoch ist die mechanische Verstärkung der Wand und die Ableitung der Wärmeenergie Richtung Boden gewährleistet. Rippen dieser Art werden daher bevorzugt bei Probengefässen für Messysteme verwendet, deren Sensorik sich in Bodennähe befindet. Selbstverständlich können in alternativen Ausführungsformen auch anders gestaltete Ausnehmungen vorgesehen sein.

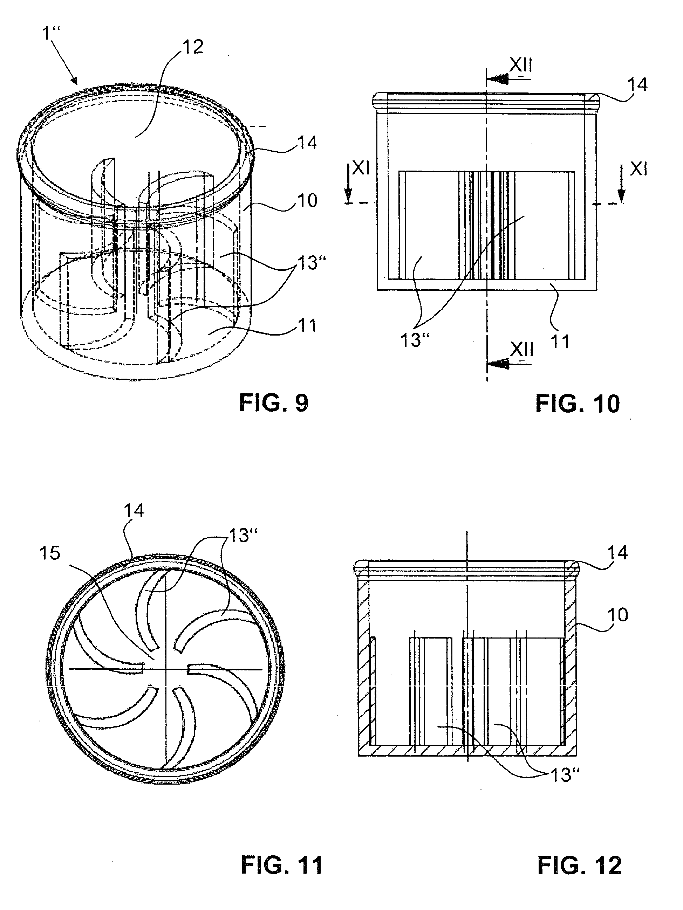

Bei dem in den Fig. 9 bis 12 gezeigten Aufnahmegefäss 1" sind die zum Homogenisieren der Wärmeverteilung im Tiegel dienenden Vertikalrippen 13" jeweils relativ zur radialen Richtung gebogen ausgebildet. Es sind dabei jeweils alle Rippen 13" in gleicher Weise und in dieselbe Richtung gebogen, so dass die Rippen 13" in dem in der Fig. 11 gezeigten Querschnitt des Aufnahmegefässes 1" die Gestalt eines Schaufelrades beschreiben.

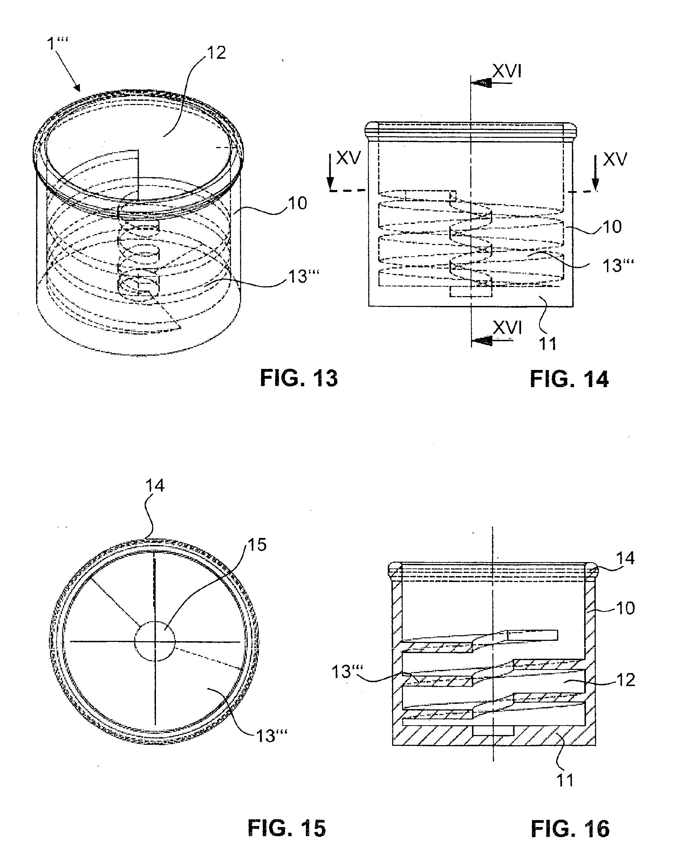

In der Ausführungsform der Fig. 13 bis 16 ist die Struktur zum Optimieren der Wärmeverteilung nicht durch vertikale Rippen gebildet, sondern durch eine Spiralrippe 13"'. Die Spiralrippe 13"' ist dabei als eine Spirale ausgestaltet, welche sich vom Boden 11 aus in Längsrichtung des Hohlraums 12 um den zentralen Kanal 15 herum nach oben windet. Auch die Spiralrippe 13"' bildet, genauso wie die im Hohlraum vorgesehenen Strukturen der anderen beschriebenen Ausführungsformen, entlang der Längsrichtung auf jeder Ebene des Hohlraums 12 jeweils zumindest zwei miteinander verbundene Kammern. Die Rippe 13"' ist in radialer Richtung entlang ihrer Aussenseite mit dem Mantel 10 des Aufnahmegefässes 1'" verbunden und erhöht dadurch die mechanische Stabilität des Tiegels.

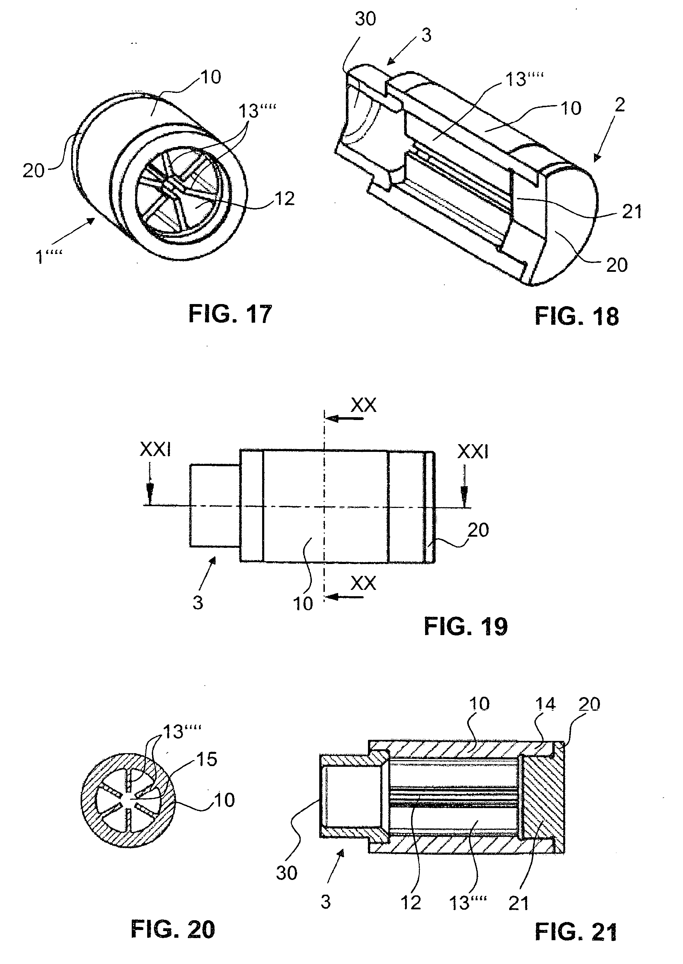

Eine weitere Ausführungsform eines erfindungsgemässen Probengefässes, welches eine Weiterentwicklung der in der WO 2009/070904 offenbarten Hochdruckkapsel darstellt, ist in den Fig. 17 bis 21 gezeigt. Das Probengefäss ist in dieser Ausführungsform als ein Hochdrucktiegel ausgebildet, welcher insbesondere für die Differenzthermoanalyse geeignet ist. Das Aufnahmegefäss 1"" weist jeweils in Längsrichtung zu beiden Seiten hin eine Öffnung auf, wobei die eine durch einen Verschlusskörper 2 und die andere durch ein Anschlussstück 3 verschliessbar ist. Der Verschlusskörper 2 bildet in dieser Ausführungsform den Boden des Aufnahmegefässes 1"" und weist, wie beispielsweise in der Fig. 18 gezeigt ist, eine Verschlussfläche 20 und einen in den Hohlraum 12 des Aufnahmegefässes 1"" hineinragenden Bereich 21 auf. Das Anschlussstück 3, welches in das Aufnahmegefäss 1"" einsetzbar ist, dient dazu, die Druckverhältnisse im Hohlraum 12 des Aufnahmegefässes 1"" während einer Kalorimetriemessung zu messen. Das Anschlussstück 3 weist dazu eine Membran 30 auf, welche einen hülsenartigen Bereich des Anschlussstücks 3 auf der vom Verschlusskörper 2 wegweisenden Seite des Anschlussstücks 3 verschliesst. Das Aufnahmegefäss 1"", welches im Vergleich zu demjenigen der in den Fig. 1 bis 16 dargestellten Ausführungsformen proportional länger ausgebildet ist, weist im Hohlraum 12 vertikale Radialrippen 13"" auf, welche zur gleichmässigen Verteilung der Wärmeenergie im Probengefäss dienen, und welche analog zu den Radialrippen 13 in der Ausführungsform der Fig. 1 bis 4 ausgestaltet sind. Die Radialrippen 13"" weisen jedoch eine im Vergleich zur Wandstärke des Mantels 10 deutlich verringerte Wandstärke auf.

Der Innendurchmesser des Aufnahmegefässes 1"" beträgt bei dieser Ausführungsform 0.5 bis 2 cm. Das Aufnahmegefäss 1"" des Probengefässes besitzt bei einem Probevolumen von 0.1 - 6 ml eine Masse von 5 - 30 g. Die Wandstärke des Mantels 10 beträgt 0.2 - 1.5 mm, und die Höhe des Aufnahmegefässes 1"" 0.5 - 4 cm.

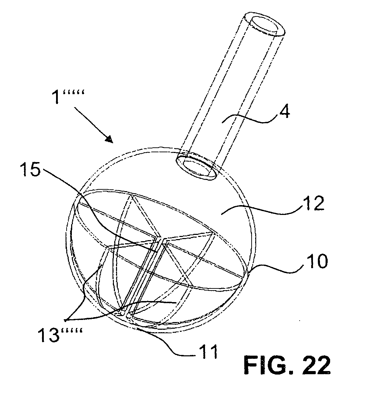

Die Figur 22 zeigt eine Ausführungsform eines Probengefässes, welches insgesamt im Wesentlichen die Form eines Rundkolbens aufweist. Der Boden 11 des Aufnahmegefässes 1"'" geht bei dieser Ausführungsform fliessend in den Mantel 10 über. Der Hohlraum 12 ist hier kugelförmig ausgebildet, wobei die Struktur zum Homogenisieren der Wärmeverteilung nur im unteren halbkugelförmigen Bereich dieses Hohlraums 12 in Form von sechs vertikalen Radialrippen 13"'" vorhanden ist. Die radiale Richtung ist hier in Bezug auf die Längsachse des Probengefässesdefiniert. Auf der gegenüberliegenden Seite des Bodens 11 weist das Probengefäss ein Einfüllrohr 4 auf, welches zum Einfüllen der Probe in den Hohlraum 12 dient und sich entlang der Längsachse des Probengefässes erstreckt. Das Einfüllrohr 4 kann beispielsweise luftdicht mit einem Deckel verschliessbar oder an einen Drucksensor anschliessbar sein.

Selbstverständlich ist die hier beschriebene Erfindung nicht auf die erwähnten Ausführungsformen beschränkt, und eine Vielzahl von Abwandlungen ist möglich. So muss beispielsweise die Wandstärke der wärmehomogenisierenden Struktur im Aufnahmegefäss nicht zwingend an jeder Stelle gleich sein, sondern könnte sich beispielsweise auch in radialer Richtung oder in Längsrichtung verändern. Ebenso ist das Vorhandensein eines zentralen Kanals 15 im Bereich dieser Strukturen nicht zwingend. So könnten sich beispielsweise die in den Ausführungsformen der Fig. 1 bis 22 gezeigten Strukturen im Hohlraum 12 jeweils auch bis zum Zentrum des Hohlraums 12 hin erstrecken. Die Strukturen könnten in den verschiedenen Ausführungsformen jeweils auch umlaufend beabstandet zur Innenseite des Mantels 10 angeordnet sein, wodurch die dazwischen liegenden Kammern jeweils entlang der radialen Aussenseite der Struktur miteinander verbunden wären. Eine Vielzahl weiterer Abwandlungen ist denkbar.

**BEZUGSZEICHENLISTE**

| | | | |
|---|---|---|---|
| 1, 1', 1", 1"', 1"", 1""' | Aufnahmegefäss | 13"" | Vertikale Radialrippen |
| | | 13""' | Vertikale Radialrippen |
| 10 | Mantel | 14 | Verbindungsbereich |
| 11 | Boden | 15 | Kanal |
| 12 | Hohlraum | 2 | Verschlusskörper |
| 13 | Vertikale Radialrippen | 20 | Verschlussfläche |
| 13' | Vertikale Radialrippen mit Ausnehmungen | 21 | Hineinragender Bereich |
| | | 3 | Anschlussstück |
| 13" | Vertikale, gebogene Rippen | 30 | Membran |
| 13"' | Spiralrippe | 4 | Einfüllrohr |

## Patentansprüche

1. Hochdrucktiegel für kalorimetrische Messungen, aufweisend ein Aufnahmegefäss (1; 1'; 1"; 1"'; 1""; 1""') mit einem Boden (11; 20, 21), einem umlaufenden Mantel (10) und einem Hohlraum (12), welcher durch den Mantel (10) und den Boden (11; 20, 21) begrenzt ist und zur Aufnahme einer Probe dient, wobei der Hohlraum (12) eine radiale Richtung mit einem Innendurchmesser sowie eine Längsachse und eine Längenausdehnung entlang dieser Längsachse aufweist;
**dadurch gekennzeichnet, dass**
im Hohlraum (12) zumindest eine Struktur (13; 13'; 13"; 13"'; 13""; 13""') vorhanden ist, welche eine wärmeleitende Funktion aufweist und dazu dient, die Wärmeverteilung im Hochdrucktiegel während einer Kalorimetriemessung zu homogenisieren, und dass sich die Struktur (13; 13'; 13"; 13"'; 13""; 13""') über mindestens die Hälfte des Innendurchmessers in die radiale Richtung und entlang der Längsachse über mindestens die Hälfte der Längenausdehnung in den Hohlraum (12) hinein erstreckt.

2. Hochdrucktiegel gemäss Anspruch 1, wobei die Struktur (13; 13'; 13"; 13"'; 13""; 13""') den Hohlraum (12) in Kammern unterteilt, welche miteinander verbunden sind.

3. Hochdrucktiegel gemäss Anspruch 1, wobei sich die Struktur (13; 13'; 13"; 13"'; 13""; 13""') entlang der Längsachse über die im Wesentlichen gesamte Längenausdehnung des Hohlraums (12) erstreckt.

4. Hochdrucktiegel gemäss einem der vorhergehenden Ansprüche, wobei die Struktur (13; 13'; 13"; 13"'; 13""; 13""') mit dem Mantel (10) verbunden ist oder am Mantel (10) anliegt.

5. Hochdrucktiegel gemäss einem der vorhergehenden Ansprüche, wobei die Struktur (13; 13'; 13"; 13"'; 13""; 13""') mit dem Boden (11; 20, 21) verbunden ist oder am Boden (11; 20, 21) anliegt.

6. Hochdrucktiegel gemäss einem der vorhergehenden Ansprüche, wobei der Hohlraum (12) einen zentral angeordneten Kanal (15) aufweist, welcher vollständig durch die Struktur (13; 13'; 13"; 13"'; 13""; 13""') hindurchführt.

7. Hochdrucktiegel -gemäss einem der vorhergehenden Ansprüche, wobei die Struktur (13; 13'; 13"; 13"'; 13""; 13""') einstückig mit dem Mantel (10) und/oder dem Boden (11; 20, 21) ausgebildet ist.

8. Hochdrucktiegel gemäss einem der vorhergehenden Ansprüche, wobei die Struktur (13; 13'; 13"; 13"'; 13""; 13""') eine Wandstärke aufweist, welche im Wesentlichen der Wandstärke des Mantels (10) entspricht.

9. Hochdrucktiegel gemäss einem der vorhergehenden Ansprüche, wobei die Struktur als eine Mehrzahl von Radialrippen (13; 13'; 13""; 13""') ausgebildet ist.

10. Hochdrucktiegel gemäss Anspruch 9, wobei genau sechs Radialrippen (13; 13'; 13""; 13""') vorhanden sind, welche in gleichmässigen Abständen entlang dem Mantel (10) angeordnet sind.

11. Hochdrucktiegel gemäss einem der Ansprüche 9 oder 10, wobei die Radialrippen (13') Ausnehmungen mit jeweils einer bogenförmigen Kontur aufweisen.

12. Hochdrucktiegel gemäss einem der vorhergehenden Ansprüche, wobei die Struktur als eine Mehrzahl von gebogenen Rippen (13") ausgebildet ist.

13. Hochdrucktiegel gemäss einem der vorhergehenden Ansprüche, wobei die Struktur (13"') spiralförmig ausgebildet ist.

## Claims

1. High-pressure crucible for calorimetric measurements, having
a receiving vessel (1; 1' ; 1" ; 1"' ; 1""; 1''''') having a base (11; 20, 21), an encircling shell (10) and a cavity (12), the latter being delimited by the shell (10) and the base (11; 20, 21) and serving for receiving a sample, wherein the cavity (12) has a radial direction, having an inner diameter, and a longitudinal axis, and a longitudinal extent along said longitudinal axis;
**characterized in that**
at least one structure (13; 13'; 13"; 13"'; 13""; 13""'), which has a heat-conductive function and serves to homogenize the heat distribution in the high-pressure crucible during a calorimetric measurement, is present in the cavity (12), and **in that** the structure (13; 13'; 13''; 13'''; 13''''; 13''''') extends across at least half of the inner diameter in the radial direction and, along the longitudinal axis, across at least half of the longitudinal extent into the cavity (12).

2. High-pressure crucible according to Claim 1, wherein the structure (13; 13'; 13" ; 13"'; 13""; 13""') divides the cavity (12) into chambers which are connected to one another.

3. High-pressure crucible according to Claim 1, wherein the structure (13; 13'; 13"; 13"'; 13""; 13""') extends along the longitudinal axis across substantially the entire longitudinal extent of the cavity (12).

4. High-pressure crucible according to one of the preceding claims, wherein the structure (13; 13'; 13" ; 13"'; 13""; 13""') is connected to the shell (10) or lies against the shell (10).

5. High-pressure crucible according to one of the preceding claims, wherein the structure (13; 13'; 13"; 13"'; 13""; 13""') is connected to the base (11; 20, 21) or lies against the base (11; 20, 21).

6. High-pressure crucible according to one of the preceding claims, wherein the cavity (12) has a centrally arranged duct (15) which leads completely through the structure (13; 13'; 13"; 13"; 13''''; 13""').

7. High-pressure crucible according to one of the preceding claims, wherein the structure (13; 13'; 13''; 13'''; 13''''; 13""') is configured in one piece with the shell (10) and/or the base (11; 20, 21).

8. High-pressure crucible according to one of the preceding claims, wherein the structure (13; 13'; 13''; 13'''; 13""; 13''''') has a wall thickness which substantially corresponds to the wall thickness of the shell (10).

9. High-pressure crucible according to one of the preceding claims, wherein the structure is configured as a plurality of radial ribs (13; 13'; 13''''; 13""').

10. High-pressure crucible according to Claim 9, wherein exactly six radial ribs (13; 13'; 13""; 13'''''), which are arranged at a regular spacing along the shell (10), are present.

11. High-pressure crucible according to one of Claims 9 or 10, wherein the radial ribs (13') have recesses having in each case an arc-shaped contour.

12. High-pressure crucible according to one of the preceding claims, wherein the structure is configured as a plurality of arc-shaped ribs (13'').

13. High-pressure crucible according to one of the preceding claims, wherein the structure (13''') is configured in a spiral shape.

## Revendications

1. Creuset haute pression pour mesures calorimétriques, présentant
une cuve de réception (1 ; 1' ; 1" ; 1"' ; 1"" ; 1""') avec un fond (11 ; 20, 21), une enveloppe périphérique (10) et une cavité (12), laquelle est limitée par l'enveloppe (10) et le fond (11 ; 20, 21) et sert à recevoir un échantillon, la cavité (12) présentant une direction radiale avec un diamètre intérieur ainsi qu'un axe longitudinal et une étendue longitudinale le long de cet axe longitudinal ;
**caractérisé en ce**
**qu'**au moins une structure (13 ; 13' ; 13'' ; 13"' ; 13"" ; 13""') est prévue dans la cavité (12), laquelle présente une fonction thermoconductrice et sert à homogénéiser la répartition de la chaleur dans le creuset haute pression pendant une mesure calorimétrique, et en ce que la structure (13 ; 13' ; 13'' ; 13"' ; 13"" ; 13""') s'étend sur au moins la moitié du diamètre intérieur dans la direction radiale et le long de l'axe longitudinal sur au moins la moitié de l'étendue longitudinale dans la cavité (12).

2. Creuset haute pression selon la revendication 1, dans lequel la structure (13 ; 13' ; 13" ; 13"' ; 13"" ; 13""') divise la cavité (12) en chambres qui sont connectées les unes aux autres.

3. Creuset haute pression selon la revendication 1, dans lequel la structure (13 ; 13' ; 13'' ; 13"' ; 13"" ; 13""') s'étend le long de l'axe longitudinal essentiellement sur toute l'étendue longitudinale de la cavité (12).

4. Creuset haute pression selon l'une quelconque des revendications précédentes, dans lequel la structure (13 ; 13' ; 13'' ; 13"' ; 13"" ; 13""') est connectée à l'enveloppe (10) ou s'applique contre l'enveloppe (10).

5. Creuset haute pression selon l'une quelconque des revendications précédentes, dans lequel la structure (13 ; 13' ; 13'' ; 13"' ; 13"" ; 13""') est connectée au fond (11 ; 20, 21) ou s'applique contre le fond (11 ; 20, 21).

6. Creuset haute pression selon l'une quelconque des revendications précédentes, dans lequel la cavité (12) présente un canal (15) disposé centralement, lequel s'étend complètement à travers la structure (13 ; 13' ; 13'' ; 13''' ; 13"" ; 13""').

7. Creuset haute pression selon l'une quelconque des revendications précédentes, dans lequel la structure (13 ; 13' ; 13'' ; 13"' ; ; 13"" ; 13''''') est réalisée d'une seule pièce avec l'enveloppe (10) et/ou le fond (11 ; 20, 21).

8. Creuset haute pression selon l'une quelconque des revendications précédentes, dans lequel la structure (13 ; 13' ; 13'' ; 13"' ; 13"" ; 13""') présente une épaisseur de paroi qui correspond essentiellement à l'épaisseur de paroi de l'enveloppe (10).

9. Creuset haute pression selon l'une quelconque des revendications précédentes, dans lequel la structure est réalisée sous forme d'une pluralité d'ailettes radiales (13 ; 13' ; 13"" ; 13''''').

10. Creuset haute pression selon la revendication 9, dans lequel exactement six ailettes radiales (13 ; 13' ; 13"" ; 13""') sont prévues, lesquelles sont disposées à intervalles réguliers le long de l'enveloppe (10).

11. Creuset haute pression selon l'une quelconque des revendications 9 ou 10, dans lequel les ailettes radiales (13') présentent des évidements ayant à chaque fois un contour de forme cintrée.

12. Creuset haute pression selon l'une quelconque des revendications précédentes, dans lequel la structure est réalisée sous forme d'une pluralité d'ailettes cintrées (13").

13. Creuset haute pression selon l'une quelconque des revendications précédentes, dans lequel la structure (13"') est réalisée en forme de spirale.
